# EUROPÄISCHE PATENTANMELDUNG

(11) **EP 2 963 265 A1**
(43) Veröffentlichungstag der Anmeldung: **06.01.2016**
(21) Anmeldenummer: 15168378.6
(22) Anmeldetag: 20.05.2015
(51) Int. Cl.: F02B 37/24, F02B 37/18

(54) **VERFAHREN UND STEUERUNG ZUM BETREIBEN EINES ABGASTURBOLADERS**

(30) Priorität: 27.06.2014 DE 102014212447
(71) Anmelder: Volkswagen Aktiengesellschaft, 38440 Wolfsburg (DE)
(72) Erfinder: Jeschke, Jens, 38106 Braunschweig (DE); Rebohl, Thorsten, 38527 Meine (DE); Cassebaum, Oliver, 38448 Wolfsburg (DE)

(57) **Zusammenfassung**

Die vorliegende Erfindung betrifft ein Verfahren zum Betreiben eines Abgasturboladers (1), der einen Verdichter (10) und eine Abgasturbine (11) aufweist. Gemäß dem Verfahren wird auf Grundlage eines Verdichter-Druckverhältnis-Sollwerts (600) für ein Druckverhältnis über dem Verdichter (10) und eines Verdichter-Massenstrom-Sollwertes (601) für einen Massenstrom durch den Verdichter (10) ein Druckverhältnis über der Abgasturbine (11) eingestellt (6).

## Beschreibung

Die Erfindung betrifft ein Verfahren zum Betreiben eines Abgasturboladers und eine Betriebseinrichtung zum Betreiben eines Abgasturboladers auf Basis eines solchen Verfahrens.

Verbrennungskraftmaschinen werden häufig mit Aufladungssystemen, beispielsweise mit Abgasturboladern, kombiniert, um Druckverhältnisse im Bereich eines Brennraums der Verbrennungskraftmaschine und damit eine Luftzusammensetzung in dem Brennraum so beeinflussen zu können, dass ein effizienter und kraftstoffarmer Betrieb der Verbrennungskraftmaschine erfolgen kann. Ein Abgasturbolader enthält üblicherweise einen Verdichter und eine Abgasturbine, wobei die Abgasturbine durch Abgas, das von der Verbrennungskraftmaschine abgegeben wird, angetrieben wird und über eine Welle mit dem Verdichter gekoppelt ist. Mit Hilfe eines Bypasses, einer variablen Turbinengeometrie, einer Abgasrückführung oder anderen ladungsbeeinflussenden Einrichtungen lassen sich die Leistungsaufnahme und -abgabe des Abgasturboladers verändern, was zu einer Laderdrehzahlbeeinflussung führen und eine Änderung des Druckverhältnisses und des Massenstroms über der Verbrennungskraftmaschine bewirken kann.

Zum Betreiben eines Abgasturboladers bzw. zum Steuern von Einrichtungen des Luftsystems der Verbrennungskraftmaschine wie des Bypasses oder der variablen Turbinengeometrie sind unterschiedliche Verfahren bekannt. So offenbart beispielsweise die DE 199 63 3578 A1 ein Verfahren zum Steuern von Stellorganen eines Luftsystems einer Verbrennungskraftmaschine, wobei mit Hilfe von Stellgrößen und/oder von Messgrößen eine Größe, die das Luftsystem charakterisiert, beispielsweise eine Turboladerleistung, bestimmt wird. Die DE 600 16 108 T2 beschreibt das Steuern eines Ladedrucks in Abhängigkeit von einem Abgasrückführparameter und einem Ansaugdruck. Die US 8,646,270 B2 betrifft ein Verfahren zum Steuern eines Bypassventils in Abhängigkeit von einer mit einem Drehzahlsensor bestimmten Drehzahl.

Die Aufgabe der vorliegenden Erfindung besteht darin, ein gegenüber diesem Stand der Technik verbessertes Verfahren zum Betreiben eines Abgasturboladers und eine verbesserte Betriebseinrichtung zum Betreiben eines Abgasturboladers bereitzustellen.

Diese Aufgabe wird durch das erfindungsgemäße Verfahren zum Betreiben eines Abgasturboladers nach Anspruch 1 und die Steuerung zum Betreiben eines Abgasturboladers nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Betreiben eines Abgasturboladers, der einen Verdichter und eine Abgasturbine aufweist, wobei auf Grundlage eines Verdichter-Druckverhältnis-Sollwerts für ein Druckverhältnis über dem Verdichter und eines Verdichter-Massenstrom-Sollwerts für einen Massenstrom durch den Verdichter ein Druckverhältnis über der Abgasturbine (Turbinen-Druckverhältnis) eingestellt wird. Die Einstellung des Turbinen-Druckverhältnisses und damit der Betrieb des Abgasturboladers können somit einfach und gleichzeitig robust gegenüber Störeinflüssen gestaltet sein.

Das erfindungsgemäße Verfahren zum Betreiben eines Abgasturboladers kann auf einem Abgasturbolader basieren, der mit einer ein Druckverhältnis über der Abgasturbine beeinflussenden Einrichtung (im Folgenden Einstelleinrichtung) gekoppelt ist oder eine solche enthält. Der Verdichter des Abgasturboladers kann in einer Luftzuführleitung zum Zuführen von Frischluft in eine Verbrennungskraftmaschine angeordnet sein und die Abgasturbine kann in einem Abgaskanal zum Ableiten von Abgas aus der Verbrennungskraftmaschine angeordnet sein. Der Abgasturbolader kann mit einer Verbrennungskraftmaschine kombiniert sein. Die Verbrennungskraftmaschine kann als ein Dieselmotor oder ein Benzinmotor gestaltet sein.

Als Frischluft wird jedes Gasgemisch bezeichnet, das durch die Zuführleitung in die Verbrennungskraftmaschine eingelassen wird. Beispielsweise kann die Frischluft ein Gasgemisch, dessen Zusammensetzung der Luft in der Atmosphäre gleicht bzw. ähnelt und das Abgasanteile aufgrund äußerer Abgasrückführung enthalten kann, oder ein Gas-Kraftstoffgemisch sein. Die Frischluft kann im Gegensatz zu dem Abgas, das nach dem Verbrennungsvorgang aus dem Zylinder ausgelassen wird, einen höheren Sauerstoffanteil enthalten. Das Druckverhältnis über dem Verdichter kann als ein Verhältnis aus einem Druck in der Zuführleitung stromabwärts des Verdichters (Ladedruck) und einem Druck in der Zuführleitung stromaufwärts des Verdichters (Ansaugdruck) oder als Verhältnis aus dem Ansaugdruck und dem Ladedruck definiert sein. Der Verdichter-Druckverhältnis-Sollwert und der Verdichter-Massenstrom-Sollwert können von einer Motorsteuerung, beispielsweise einer Gassystemregelung, die einen Teil der Motorsteuerung bildet, bereitgestellt werden. Dazu kann die Motorsteuerung auf Grundlage beispielsweise eines angeforderten Fahrzustands einen Verdichter-Druckverhältnis-Sollwert und einen Verdichter-Massenstrom-Sollwert ermitteln.

Das Druckverhältnis über der Abgasturbine kann als Verhältnis aus einem Druck in dem Abgaskanal stromabwärts der Abgasturbine und einem Druck in dem Abgaskanal stromaufwärts der Abgasturbine oder als Verhältnis aus einem Druck in dem Abgaskanal stromaufwärts der Abgasturbine und einem Druck in dem Abgaskanal stromabwärts der Abgasturbine definiert sein.

Durch die Einbeziehung sowohl des Verdichter-Druckverhältnis-Sollwerts als auch des Verdichter-Massenstrom-Sollwerts beim Einstellen des Turbinen-Druckverhältnisses kann eine Schwingungsneigung der Abgasturboladeransteuerung, mit der eine Schwingungsneigung des Gassystems der Verbrennungskraftmaschine einhergehen kann, bei Störeinflüssen verringert werden, wodurch eine Robustheit des Verfahrens erhöht wird. Dadurch kann eine verbesserte emissionstechnische Kontrolle der Verbrennungskraftmaschine erreicht werden und gegebenenfalls eine Reduzierung des Kraftstoffverbrauchs der Verbrennungskraftmaschine bewirkt werden.

Zum Betreiben des Abgasturboladers kann weiterhin auf der Grundlage des Verdichter-Druckverhältnis-Sollwerts und des Verdichter-Massenstrom-Sollwerts eine Solldrehzahl des Verdichters ermittelt werden und auf Grundlage dieser Solldrehzahl das Druckverhältnis über der Abgasturbine eingestellt werden. Durch das Einstellen des Druckverhältnisses auf der Grundlage des Verdichter-Druckverhältnis-Sollwerts und des Verdichter-Massenstrom-Sollwerts bzw. der Solldrehzahl können Schwingungen aufgrund einer Zu-/Abschaltung einer Hochdruck-Abgasrückführung bei einer Änderung des durch den Verdichter bzw. durch die Abgasturbine fließenden Massenstroms verringert oder vermieden werden, die ein Betriebsverhalten der Verbrennungskraftmaschine in unerwünschter Weise beeinflussen.

Die Solldrehzahl kann beispielsweise mittels eines strömungstechnischen Verdichterkennfelds bestimmt werden. Die Eingangsgrößen des strömungstechnischen Verdichterkennfelds können den Verdichter-Druckverhältnis-Sollwert und den Verdichter-Massenstrom-Sollwert enthalten oder aus diesen bestehen.

Der Massenstrom der Frischluft durch den Verdichter kann in dem strömungstechnischen Verdichterkennfeld reduziert vorgegeben sein, beispielsweise auf einen Referenzdruck und/oder eine Referenztemperatur bezogen sein. Aus dem strömungstechnischen Verdichterkennfeld kann eine reduzierte Solldrehzahl des Verdichters abgeleitet werden, die auf dieselbe Referenztemperatur gerechnet ist. Die reduzierte Drehzahl des Verdichters kann durch eine geeignete Entnormierung, beispielsweise durch Multiplikation oder Division mit einem Entnormierungsfaktor, in eine nicht-reduzierte Solldrehzahl umgewandelt werden. Damit vereinfacht sich das auf einem Prüfstand vermessene Verdichterkennfeld und es lässt sich mittels eines einzigen strömungstechnischen Verdichterkennfelds eine reduzierte Solldrehzahl des Verdichters für unterschiedlichen Drücke und/oder Temperaturen bestimmen.

Alternativ können auch mehrere strömungstechnische Kennfelder zur Verfügung gestellt sein, um auf Grundlage des Verdichter-Druckverhältnis-Sollwerts und des Verdichter-Massenstrom-Sollwerts eine Solldrehzahl zu ermitteln. Ersatzweise kann die Solldrehzahl aus dem Verdichter-Druckverhältnis-Sollwert und dem Verdichter-Massenstrom-Sollwert beispielsweise mittels einer mathematischen Gleichung berechnet werden.

Auf der Grundlage der Solldrehzahl und des Verdichter-Massenstrom-Sollwerts kann eine Solltemperaturdifferenz der Frischluft über dem Verdichter ermittelt werden. Die Solltemperaturdifferenz kann beispielsweise mittels eines thermodynamischen Verdichterkennfelds, das beispielsweise mit Hilfe eines Prüfstands bedatet sein kann, bestimmt werden. Die Eingangsgrößen des thermodynamischen Verdichterkennfelds können die Solldrehzahl und den Verdichter-Massenstrom-Sollwert enthalten oder aus diesen bestehen. In das thermodynamische Verdichterkennfeld können wie beim strömungstechnischen Verdichterkennfeld reduzierte Größen mit gleichen Referenzen, beispielsweise mit gleichem Referenzdruck und/oder mit gleicher Referenztemperatur, eingehen. Die Solltemperaturdifferenz kann auf eine nicht reduzierte bzw. normierte Ausgangsgröße umgerechnet sein. Statt des thermodynamischen Kennfeldes lässt sich beispielsweise auch ein mathematischer Ansatz zur Solltemperaturdifferenzberechnung mit den gleichen Eingangsgrößen nutzen.

Auf Grundlage des Verdichter-Druckverhältnis-Sollwerts und des Verdichter-Massenstrom-Sollwerts kann eine Sollleistung des Verdichters ermittelt werden und auf Grundlage dieser Verdichter-Sollleistung kann das Druckverhältnis über der Abgasturbine eigestellt werden.

Die Verdichter-Sollleistung kann auf Grundlage der Solltemperaturdifferenz über dem Verdichter und des Massenstrom-Sollwerts durch den Verdichter bestimmt werden. Die Solltemperaturdifferenz kann dabei wie oben beschrieben bestimmt sein. Aus der Solltemperaturdifferenz und dem Massenstrom kann die Verdichter-Sollleistung hergeleitet werden, beispielsweise über einen mathematischen Gleichungsansatz bestimmt werden. Alternativ kann die Verdichter-Sollleistung auf Grundlage der Solldrehzahl des Verdichters und des Massenstrom-Sollwerts durch den Verdichter bestimmt werden. Die Verdichter-Sollleistung kann selbst die Ausgangsgröße eines Kennfelds sein, dessen Eingangsgrößen die Solldrehzahl und der Massenstrom sind.

Das Einstellen des Turbinen-Druckverhältnisses auf Grundlage des Verdichter-Druckverhältnis-Sollwerts und des Verdichter-Massenstrom-Sollwerts kann auf Grundlage des Verdichter-Druckverhältnis-Sollwerts, des Verdichter-Massenstrom-Sollwerts und Sollwerten weiterer Größen, beispielsweise eines Massenstroms durch die Abgasturbine, basieren und eine Vorsteuerung darstellen. Als Sollwerte können hier Werte verstanden werden, die beispielsweise auf Basis eines angeforderten Betriebszustands der Verbrennungskraftmaschine bestimmt sind, wobei ein aktueller Betriebszustand der Verbrennungskraftmaschine nicht oder nur unwesentlich berücksichtigt wird.

Die Vorsteuerung kann also das Bestimmen einer Solldrehzahl aus dem Verdichter-Druckverhältnis-Sollwert und dem Verdichter-Massenstrom-Sollwert und/oder das Bestimmen der Verdichter-Sollleistung, wie sie oben beschrieben sind, enthalten. Die Vorsteuerung kann weitere Schritte wie das Bestimmen einer Turbinen-Sollleistung aus der Verdichter-Sollleistung und/oder das Bestimmen eines Turbinen-Druckverhältnis-Sollwerts auf Grundlage der Turbinen-Sollleistung, eines Turbinenwirkungsgrads, eines Turbinenmassenstrom-Sollwerts durch die Turbine, einer Temperatur des Abgases stromaufwärts der Abgasturbine, eines Istdruckes nach der Turbine und/oder das Bestimmen einer Solleinstellung der Einstelleinrichtung enthalten. Bei der Bestimmung der Turbinensollleistung können weitere Einflüsse beispielsweise eines elektrischen Antriebs, z.B. eines auf der Welle angebrachten E-Motor, der den Verdichter mitbeschleunigen kann, berücksichtigt werden.

Zusätzlich oder alternativ kann das erfindungsgemäße Verfahren als Regelung eingesetzt werden. Die Regelungsberechnung kann in kurzen Zeitintervallen von beispielsweise einigen Millisekunden wiederholt werden. Bei der Regelung kann das Turbinen-Druckverhältnis auf Grundlage des Verdichter-Druckverhältnis-Sollwerts und des Verdichter-Massenstrom-Sollwerts in Kombination mit einer aktuellen Drehzahl eingestellt werden. Beispielsweise kann auf Grundlage des Verdichter-Druckverhältnis-Sollwerts und des Verdichter-Massenstrom-Sollwerts, wie oben beschrieben, die Solldrehzahl des Verdichters bestimmt werden und auf Grundlage der Solldrehzahl und der aktuellen Drehzahl das Turbinen-Druckverhältnis eingestellt werden. Durch die Regelung kann bewirkt werden, dass das Turbinen-Druckverhältnis kontinuierlich überprüft und angepasst werden kann und somit die Ladung der Verbrennungskraftmaschine optimiert werden kann.

Die aktuelle Drehzahl des Verdichters kann mit Hilfe eines strömungstechnischen Kennfeldes in Abhängigkeit von einem aktuellen Verdichter-Druckverhältnis über dem Verdichter und einem aktuellen Massenstrom durch den Verdichter bestimmt werden. Dazu kann das strömungstechnische Kennfeld, das für die Bestimmung der Solldrehzahl eingesetzt werden kann, oder ein entsprechendes strömungstechnisches Kennfeld verwendet werden, wobei als Eingangsgrößen das aktuelle Verdichter-Druckverhältnis und der aktuelle Massenstrom durch den Verdichter herangezogen werden. Das aktuelle Druckverhältnis und/oder der aktuelle Massenstrom können zuvor gemessen werden und/oder mithilfe eines Modells beispielsweise in Abhängigkeit einer den aktuellen Betriebszustand der Verbrennungskraftmaschine berücksichtigenden Größe modelliert sein. Das Modell kann im Rahmen einer Gassystemmodellierung bereitgestellt werden. Alternativ ist eine direkte Erfassung der aktuellen Turbinendrehzahl (Ist-Turbinendrehzahl) mit einer geeigneten Messeinrichtung möglich.

Bei der Regelung können die aktuelle Drehzahl und die Solldrehzahl des Verdichters miteinander verglichen werden. Das Vergleichen kann beispielsweise durch Subtraktion der aktuellen Drehzahl von der Solldrehzahl oder umgekehrt erfolgen. Auf Grundlage des Vergleichsergebnisses kann das Turbinen-Druckverhältnis eingestellt werden.

Beispielsweise kann auf Grundlage des Verdichter-Druckverhältnis-Sollwerts, des Verdichter-Massenstrom-Sollwerts und der aktuellen Drehzahl ein Leistungskorrekturwert bestimmt werden, auf Grundlage dessen das Turbinen-Druckverhältnis eingestellt werden kann. Alternativ oder zusätzlich kann auf Grundlage des Verdichter-Druckverhältnis-Sollwerts, des Verdichter-Massenstrom-Sollwerts und der aktuellen Drehzahl ein Stellungskorrekturwert bestimmt werden, auf Grundlage dessen das Turbinen-Druckverhältnis eingestellt werden kann. Der Leistungskorrekturwert und/oder der Stellungskorrekturwert können in Tabellen hinterlegt sein. Beispielsweise kann eine Regeldifferenz (Solldrehzahl minus Istdrehzahl) über einen parametrierbaren, das Turboladerverhalten berücksichtigenden Regler, z.B. einen PID-, Fuzzy- oder sonst arbeitenden Regler, auf den Leistungs- und/oder Stellungskorrekturwert umgerechnet werden. Im Und-Fall korrigiert ein Anteil die Leistung und der andere Anteil die Stellung. Im Oder-Fall werden alle Anteile entweder als Leistungs- oder Stellungskorrekturwert genutzt.

Beim Betreiben des Abgasturboladers können zum Beispiel eine Vorsteuerung und eine Regelung stattfinden. Die Vorsteuerung und die Regelung arbeiten vorzugsweise simultan und werden wiederholt, beispielsweise zyklisch in einem festen Zeittakt, gerechnet.

Mit Anforderung eines anderen Betriebsbereichs der Verbrennungskraftmaschine, beispielsweise durch das Betätigen eines Gaspedals, kann auf Basis sich ändernder Sollwerte das Turbinen-Druckverhältnis über die Vorsteuerung neu bestimmt und mit Hilfe der Regelung korrigiert werden. Dadurch kann ein für eine optimale Ladung der Verbrennungskraftmaschine geeignetes Turbinendruckverhältnis eingestellt werden.

Zudem kann eine Regelung durchgeführt werden. Dazu kann auf Basis der Solldrehzahl und der aktuellen Drehzahl der Leistungskorrekturwert bestimmt werden und auf die im Laufe der Vorsteuerung bestimmte Turbinen-Sollleistung addiert werden. Aus dem korrigierten Wert für die Turbinen-Sollleistung kann dann eine korrigierte Solleinstellung der Einstelleinrichtung bestimmt werden. Die korrigierte Solleinstellung der Einstelleinrichtung kann dann zum Verstellen der Einstelleinrichtung verwendet werden, um das Turbinendruckverhältnis einzustellen.

Alternativ oder zusätzlich kann zur Regelung auf Basis der Solldrehzahl und der aktuellen Drehzahl der Stellungskorrekturwert bestimmt werden und auf die im Laufe der Vorsteuerung bestimmte Solleinstellung der Einstelleinrichtung addiert werden. Die korrigierte Solleinstellung kann dann zum Verstellen der Einstelleinrichtung verwendet werden, um das Turbinendruckverhältnis einzustellen.

Bei der Bestimmung der Sollleistung und/oder der korrigierten Sollleistung können noch weitere systembedingte Faktoren berücksichtigt werden, beispielsweise mechanische Verluste und/oder eventuell ein Leistungsanteil aus einem zusätzlichen, beispielsweise elektrischen, Antrieb. Diese können als Zusatzkorrekturwert in die Berechnung der Sollleistung eingehen.

Alternativ oder wenn keine Vorsteuerung vorgesehen ist, kann eine Regelung stattfinden, indem der Leistungskorrekturwert bestimmt wird und auf eine aktuelle Turbinenleistung, die beispielsweise gemessen oder mittels eines Modells bestimmt wird, addiert wird und auf Grundlage dessen das Turbinen-Druckverhältnis eingestellt wird. Die aktuelle Turbinenleistung kann auf Basis der aktuellen Drehzahl, die wie oben beschrieben bestimmt sein kann, und einem thermodynamischen Kennfeld bestimmt werden, dessen Eingangsgrößen der aktuelle Massenstrom und die aktuelle Drehzahl sind und dessen Ausgangsgröße eine aktuelle Temperaturdifferenz über dem Verdichter ist, aus der wiederum eine aktuelle Verdichterleistung bestimmbar ist. Alternativ oder zusätzlich kann der Stellungskorrekturwert bestimmt werden und auf Grundlage des Stellungskorrekturwerts und einer aktuellen Einstellung der Einstelleinrichtung das Turbinen-Druckverhältnis eingestellt werden.

Auf der Grundlage des Verdichter-Druckverhältnis-Sollwerts und des Massenstrom-Sollwerts kann beispielsweise eine Solleinstellung der Einstelleinrichtung bestimmt werden und auf Grundlage der Solleinstellung das Druckverhältnis über der Abgasturbine eigestellt werden. Dazu kann die Einstelleinrichtung in der Solleinstellung betrieben werden und/oder die Solleinstellung eingestellt werden. Die Einstelleinrichtung kann dazu ausgebildet sein, eine Gasfüllung und/oder Zustandsbedingungen innerhalb eines Brennraums der Verbrennungskraftmaschine zu beeinflussen bzw. einen Zustand eines Luftsystems, das die Zuführleitung für Frischluft, den Brennraum und den Abgaskanal enthält, zu ändern.

Die Einstelleinrichtung kann als Bypass mit Bypassventil, als Abgasrückführung mit einem Ventil oder als variable Turbinengeometrie, z.B. als verstellbare, nicht rotierende Leitschaufeln, ausgebildet sein. Alternativ kann die das Turbinen-Druckverhältnis beeinflussende Einrichtung eine Kupplung im Bereich einer den Verdichter und die Abgasturbine koppelnden Vorrichtung, oder ein Antrieb, beispielsweise ein Elektromotor, im Bereich der den Verdichter und die Abgasturbine koppelnden Vorrichtung sein. Die Einstelleinrichtung kann entsprechend den Sollvorgaben für die Einstelleinrichtung verstellt werden. Der Abgasturbolader kann somit betrieben werden, indem die Einstelleinrichtung entsprechend der Solleinstellung gesteuert wird, so dass sich ein dem Verdichter-Druckverhältnis-Sollwert ähnliches Druckverhältnis über dem Verdichter und ein dem Massenstrom-Sollwert ähnlicher Massenstrom durch den Verdichter einstellen. Damit lassen sich die Luftzusammensetzung und die Druckverhältnisse in der Verbrennungskraftmaschine gezielt beeinflussen.

Die Solleinstellung der Einstelleinrichtung kann ein Sollöffnungsgrad des Bypassventils oder ein Sollöffnungsgrad des Abgasrückführungsventils sein. Alternativ kann die Solleinstellung eine Sollstellung der Leitschaufeln sein. Die Solleinstellung kann auch eine Sollstellung der Kupplung zwischen Verdichter und Abgasturbine sein oder eine Sollantriebsgeschwindigkeit des Antriebs zwischen Verdichter und Abgasturbine.

Nach dem Bestimmen der Solleinstellung kann die Einstelleinrichtung in diese Solleinstellung gebracht werden. Zum Beispiel kann das Bypassventil oder das Abgasrückführventil entsprechend dem Sollöffnungsgrad geöffnet bzw. geschlossen werden. Alternativ können die Leitschaufeln in die Sollstellung verdreht und/oder bewegt werden und das Turbinendruckverhältnis auf Grundlage des Verdichter-Druckverhältnis-Sollwerts und des Massenstromsollwerts eingestellt werden. Es können auch für mehrere das Druckverhältnis über der Abgasturbine beeinflussende Einrichtungen auf Grundlage eines Verdichter-Druckverhältnis-Sollwerts für ein Druckverhältnis über dem Verdichter und eines Massenstrom-Sollwerts für einen Massenstrom durch den Verdichter bestimmte Solleinstellungen ermittelt werden und die das Druckverhältnis beeinflussenden Einrichtungen entsprechend verstellt werden.

Die Solleinstellung der Einstelleinrichtung, z.B. die Sollstellung der Leitschaufeln der Abgasturbine, lässt sich beispielsweise aus der ermittelten Solldrehzahl bestimmen und auf Grundlage dieser Solleinstellung kann das Druckverhältnis über der Abgasturbine eingestellt werden. Die Solleinstellung der Einstelleinrichtung kann auch auf Grundlage der Verdichter-Sollleistung ermittelt werden, die auf Grundlage des Verdichter-Druckverhältnis-Sollwerts und des Massenstrom-Sollwerts ermittelt, z.B. aus geeigneten Kennfeldern ausgelesen und/oder mittels einer mathematischen Gleichung berechnet, werden kann. Durch Verstellen der Einstelleinrichtung in die Solleinstellung kann auf Grundlage des Verdichter-Druckverhältnis-Sollwerts und des Massenstrom-Sollwerts das Turbinendruckverhältnis eingestellt werden.

Bei Vorliegen einer variablen Turbinengeometrie kann auf Grundlage des Vergleichsergebnisses die Sollstellung der Leitschaufeln der Abgasturbine ermittelt und eingestellt werden.

Die vorliegende Erfindung betrifft weiterhin eine Betriebseinrichtung zum Betreiben eines Abgasturboladers, die dazu ausgelegt ist, das erfindungsgemäße Verfahren, wie es oben beschrieben ist, auszuführen. Der zu betreibende Abgasturbolader mit einem Verdichter und einer Abgasturbine kann wie hinsichtlich des Verfahrens bereits erläutert, mit einer ein Druckverhältnis über der Abgasturbine beeinflussenden Einrichtung gekoppelt sein oder eine solche enthalten. Der Verdichter kann in einer Luftzuführleitung zum Zuführen von Frischluft in eine Verbrennungskraftmaschine angeordnet sein und die Abgasturbine kann in einem Abgaskanal zum Ableiten von Abgas aus der Verbrennungskraftmaschine angeordnet sein. Die Betriebseinrichtung ist dazu ausgelegt, auf Grundlage eines Verdichter-Druckverhältnis-Sollwerts für ein Druckverhältnis über dem Verdichter und eines Verdichter-Massenstrom-Sollwerts für einen Massenstrom durch den Verdichter ein Druckverhältnis über der Abgasturbine einzustellen.

Die Betriebseinrichtung kann elektronische Komponenten enthalten, wie beispielsweise einen Prozessor und einen Speicher, beispielsweise einen Datenspeicher. In dem Speicher können das Verfahren und entsprechende Kennlinien, Kennfelder oder dergleichen abgespeichert sein, die oben erwähnt wurden.

Die vorliegende Erfindung betrifft ferner einen Abgasturbolader mit einer Betriebseinrichtung, die zum Betreiben des Abgasturboladers vorgesehen ist. Der Abgasturbolader mit einem Verdichter und einer Abgasturbine ist beispielsweise in ein Luftsystem einer Verbrennungskraftmaschine integriert, das eine Luftzuführleitung, einen Abgaskanal, die Verbrennungskraftmaschine und eine das Turbinen-Druckverhältnis beeinflussende Einrichtung enthält.

Die vorliegende Erfindung betrifft zudem auch ein Kraftfahrzeug mit einem zuvor beschriebenen Abgasturbolader.

Ausführungsbeispiele der Erfindung werden nun beispielhaft und unter Bezugnahme auf die beigefügten Zeichnungen beschrieben, in denen:
- Fig. 1: schematisch ein Ausführungsbeispiel eines Abgasturboladers in einem Luftsystem einer Verbrennungskraftmaschine zeigt;
- Fig. 2: schematisch einem Überblick über ein Verfahren zum Bestimmen einer Solleinstellung darstellt;
- Fig. 3: schematisch eine detaillierte Übersicht hinsichtlich der Bestimmung einer Verdichter-Sollleistung und einer aktuelle Verdichterleistung zeigt; und
- Fig. 4: schematisch eine Regelung des Abgasturboladers darstellt.

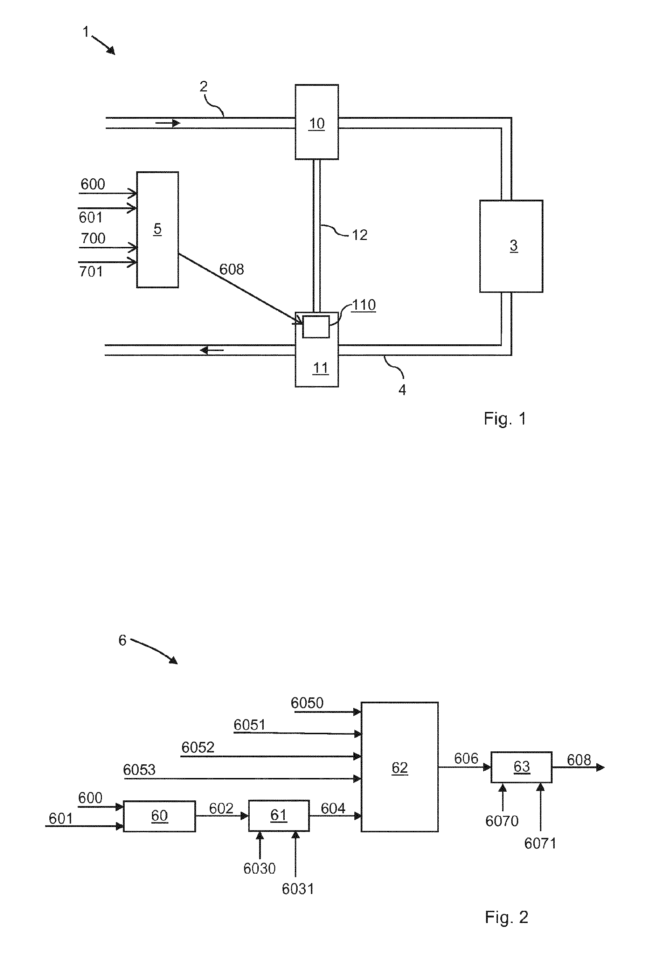

Ein Ausführungsbeispiel eines Abgasturboladers 1, der in ein Luftsystem einer Verbrennungskraftmaschine 3 integriert ist, ist in Fig. 1 gezeigt. Der Abgasturbolader 1 enthält einen Verdichter 10 und eine Abgasturbine 11, die über eine gemeinsame Welle 12 miteinander gekoppelt sind. Das Luftsystem enthält eine Zuluftleitung 2, über die Frischluft zu dem Verdichter 10 gelangt und über die Frischluft von dem Verdichter 10 in komprimierter Form in einen Brennraum der Verbrennungskraftmaschine 3 geführt wird. Weiterhin enthält das Luftsystem den Brennraum und einen Abgaskanal 4, durch den Abgas aus dem Brennraum geleitet wird, die Abgasturbine 11 antreibt und an die Umgebung abgegeben wird. Durch das Abgas wird die Abgasturbine 11 angetrieben, wodurch auch der Verdichter 10 angetrieben wird. Die Abgasturbine 11 enthält ein rotierendes Turbinenrad und verstellbare, nicht rotierende Leitschaufeln (nicht gezeigt). Anstelle der Leitschaufeln oder zusätzlich zu den Leitschaufeln kann eine andere Einstelleinrichtung vorgesehen sein.

Der Abgasturbolader 1 wird mit Hilfe einer Steuerung 5 betrieben. Die Steuerung 5 ist dazu ausgelegt, auf Grundlage eines Verdichter-Druckverhältnis-Sollwerts 600 und eines Verdichter-Massenstrom-Sollwerts 601 eine Sollstellung 608 der Leitschaufeln zu ermitteln und durch Einstellen der Sollstellung 608 ein Turbinen-Druckverhältnis über der Abgasturbine 11 einzustellen.

Mit Bezug auf Fig. 2 wird nun erklärt, wie das Turbinen-Druckverhältnis über der Abgasturbine eingestellt wird. Zum Einstellen des Turbinen-Druckverhältnisses wird die Sollstellung 608 der Leitschaufeln im Rahmen einer Vorsteuerung auf Basis von Sollwerten ermittelt wird.

Fig. 2 veranschaulicht die Ermittlung 6 der Sollstellung 608 der Leitschaufeln der Abgasturbine 11. Die Berechnung ist zur Veranschaulichung in Blöcken 60 bis 63 dargestellt, ohne dass die vorliegende Erfindung in dieser Hinsicht beschränkt ist.

Zur Ermittlung 6 der Sollstellung 608 der Leitschaufeln wird zunächst eine Verdichter-Sollleistung 602 ermittelt (Block 60). Dazu empfängt Block 60 einen Verdichter-Druckverhältnis-Sollwert 600 und einen Verdichter-Massenstrom-Sollwert 601, die von einer Gassystemregelung bereitgestellt werden. Verdichter-Druckverhältnis-Sollwert 600 und der Verdichter-Massenstrom-Sollwert 601 dienen in Block 60, der weiter unten noch im Detail erklärt wird, zur Ermittlung einer Verdichter-Sollleistung 602 des Verdichters 10.

Die ermittelte Verdichter-Sollleistung 602 wird an einen Block 61 geleitet. Dem Block 61 werden zudem ein Leistungskorrekturwert 6030, der aus einer Drehzahldifferenz aus Solldrehzahl und aktueller Drehzahl bestimmt ist, und ein ergänzender Korrekturwert 6031 bezüglich der Leistung, der durch mechanische Verluste und/oder einen zusätzlichen Antrieb bedingt ist, zugeführt. Aus der Verdichter-Sollleistung 602, dem Leistungskorrekturwert 6030 und dem ergänzenden Korrekturwert 6031 wird in Block 61 eine Turbinen-Sollleistung 604 berechnet. Diese Turbinen-Sollleistung 604 wird an den Gesamtberechnungsblock 62 übertragen, in dem ein Solldruckverhältnis 606 über der Turbine bestimmt wird. Im Gesamtberechnungsblock 62 gehen noch ein Turbinenwirkungsgrad 6050, ein Turbinenmassenstrom 6051 und ein Abgastemperatur 6052 vor der Abgasturbine 11 und ein Druck 6053 nach Abgasturbine 11 ein. Aus allen empfangenen Daten berechnet der Gesamtberechnungsblock 62 als Ergebnis das Solldruckverhältnis 606 über der Turbine. Aus dem Solldruckverhältnis 606 über der Turbine, einer Hilfsgröße 6070 und aus einem Stellungskorrekturwert 6071, der aus einer Drehzahldifferenz aus Solldrehzahl und aktueller Drehzahl bestimmt ist, wird die Sollstellung 608 der variablen Turbinengeometrie, also die Sollstellung der Leitschaufeln, bestimmt. Auf Basis der Sollstellung 608 der Leitschaufeln werden die Leitschaufeln neu ausgerichtet. Die Ausrichtung kann mit Hilfe eines Elektromotors 110 erfolgen, des in der in Fig. 1 schematisch dargestellten Abgasturbine 11 enthalten ist.

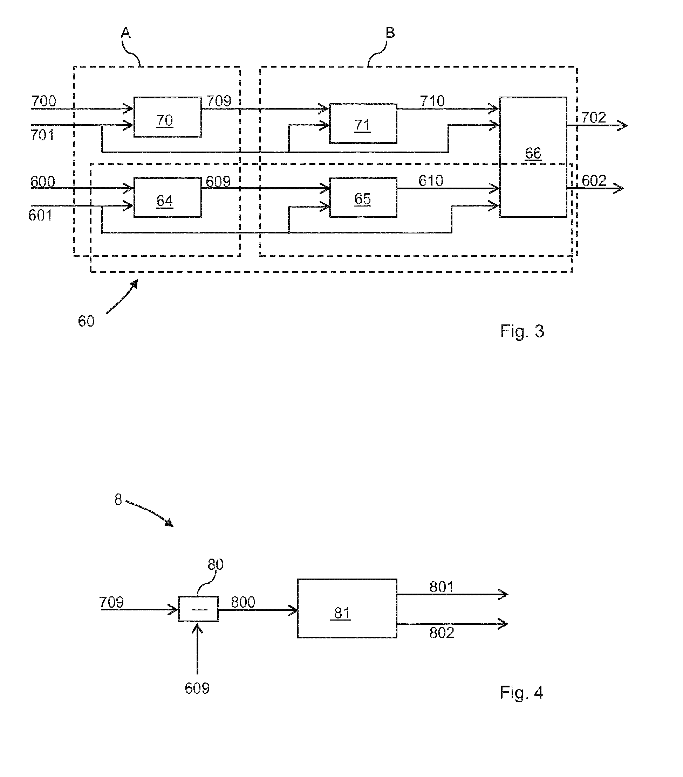

Nachfolgend wird mit Bezug auf Fig. 3 der Block 60 im Detail erklärt, der die Berechnung der Verdichter-Sollleistung 602 aus dem Verdichter-Druckverhältnis-Sollwert 600 und dem Verdichter-Massenstrom-Sollwert 601 repräsentiert. In Block 64 wird mittels eines strömungstechnischen Verdichterkennfelds, in das der Verdichter-Druckverhältnis-Sollwert 600 und der Verdichter-Massenstrom-Sollwert 601 eingehen, eine Solldrehzahl 609 des Verdichters 10 bestimmt.

Auf Grundlage der Solldrehzahl 609 des Verdichters 10 und des Massenstrom-Sollwertes 601 wird in Block 65 mittels eines thermodynamischen Verdichterkennfelds eine Solltemperaturdifferenz 610 der Frischluft über dem Verdichter 10 bestimmt. Aus der Solltemperaturdifferenz 610 und dem Massenstrom-Sollwert 601 wird dann in Block 66 die Verdichter-Sollleistung 602 berechnet.

Die Steuerung 5 in Fig. 1 ist weiterhin dazu ausgelegt, neben der hinsichtlich der Fig. 2 und der bis hierhin beschriebenen Fig. 3, eine auf die Vorsteuerung folgende Regelung durchzuführen. Wie aus Fig. 3 hervorgeht, wird im Rahmen der Regelung aus einem aktuellen Verdichter-Druckverhältnis 700 und einem aktuellen Massenstrom 701 eine aktuelle Verdichterleistung 702 ermittelt. Dazu wird in Block 70 mittels des zur Bestimmung der Solldrehzahl 609 eingesetzten strömungstechnischen Verdichterkennfelds, eine aktuelle Drehzahl 709 des Verdichters 10 bestimmt. Auf Grundlage der aktuellen Drehzahl 709 des Verdichters 10 und des aktuellen Massenstroms 701 wird in Block 71 mittels des zur Bestimmung der Solltemperaturdifferenz 610 verwendeten thermodynamischen Verdichterkennfelds, eine aktuelle Temperaturdifferenz 710 der Frischluft über dem Verdichter 10 bestimmt. Aus der aktuellen Temperaturdifferenz 710 und dem aktuellen Massenstrom 701 wird dann in Block 66 die Verdichterleistung 702 berechnet. Die Verdichterleistung 702 kann in eine aktuelle Turbinenleistung umgerechnet werden und als Grundlage für die Berechnung einer Turbinensollleistung während der Regelung eingesetzt werden.

Die Blöcke 64 und 70 in Fig. 3 stellen eine Berechnung der Solldrehzahl 609 bzw. der aktuellen Drehzahl 709 des Verdichters 110 über Strömungseigenschaften des Verdichters 10 dar (Block A). Die Blöcke 65 und 71 sowie 66 in Fig. 3 stellen eine Berechnung der Solltemperaturdifferenz 610 bzw. der aktuellen Temperaturdifferenz 710 über den Verdichter 10 über thermodynamische Eigenschaften des Verdichters 10 dar (Block B).

Bei der Regelung 8 wird, wie in Fig. 4 gezeigt, auf die Solldrehzahl 609 und die aktuelle Drehzahl 709 zugegriffen. Diese werden in Block 80 miteinander verglichen. Auf Basis eines von Block 80 ausgegebenen Vergleichsergebnisses 800 wird in einem Block 81 ein Leistungskorrekturwert 801 und/oder ein Stellungskorrekturwert 802 berechnet. Der Leistungskorrekturwert 801 geht in die Berechnung der Turbinensollleistung, wie hinsichtlich Fig. 2 beschrieben, ein. Der Stellungskorrekturwert 802 geht in die Berechnung der Sollstellung der Leitschaufeln bei der Umrechnung des Solldruckverhältnisses ein. Die unter Berücksichtigung des Leistungskorrekturwerts 801 und des Stellungskorrekturwerts 802 bestimmte Sollstellung 608 wird anschließend eingestellt, indem die Leitschaufeln entsprechend bewegt werden.

Wie in Fig. 1 dargestellt, sorgt die Steuerung 5 dafür, dass die Leitschaufeln bei der Vorsteuerung und während der Regelung mittels des Elektromotors 110 in die jeweils bestimmten Sollstellungen 608, 608a bewegt werden. Dadurch wird das Turbinen-Druckverhältnis auf Grundlage des Verdichter-Druckverhältnis-Sollwerts 600 und des Massenstrom-Sollwerts eingestellt.

### Bezugszeichenliste

- 1: Abgasturbolader
- 10: Verdichter
- 11: Abgasturbine
- 12: Welle
- 110: Elektromotor zum Verstellen der Leitschaufeln
- 2: Luftzuführleitung
- 3: Verbrennungskraftmaschine
- 4: Abgaskanal
- 5: Steuerung
- 6: Bestimmung der Sollstellung der Leitschaufeln
- 60: Bestimmen der Verdichter-Sollleistung
- 61: Bestimmen der Turbinen-Sollleistung
- 62: Bestimmen einer Drehzahl-Sollbeschleunigung
- 63: Bestimmen der Sollstellung der Leitschaufeln
- 64: Bestimmen der Solldrehzahl
- 65: Bestimmen der Solltemperaturdifferenz über dem Verdichter
- 66: Bestimmen der Verdichter-Sollleistung und der aktuellen Verdichterleistung
- 600: Verdichter-Druckverhältnis-Sollwert
- 601: Verdichter-Massenstrom-Sollwert
- 602: Verdichter-Sollleistung
- 6030: Leistungskorrekturwert
- 6031: ergänzender Korrekturwert
- 604: Turbinen-Sollleistung
- 6050: Wirkungsgrad der Abgasturbine
- 6051: Turbinenmassenstrom
- 6052: Abgastemperatur vor der Abgasturbine
- 606: Soll-Druckverhältnis über Turbine
- 6070: Hilfsgröße
- 6071: Stellungskorrekturwert
- 608: Sollstellung der Leitschaufeln
- 608a: angepasste Sollstellung der Leitschaufeln
- 609: Solldrehzahl des Verdichters
- 610: Solltemperaturdifferenz über dem Verdichter
- 70: Bestimmen der aktuellen Drehzahl
- 71: Bestimmen der aktuellen Temperaturdifferenz über dem Verdichter
- 700: aktuelles Druckverhältnis über dem Verdichter
- 701: aktueller Massenstrom durch den Verdichter
- 702: aktuelle Verdichterleistung
- 709: aktuelle Drehzahl
- 710: aktuelle Temperaturdifferenz über dem Verdichter
- 8: Regelung
- 80: Vergleichen der aktuellen Drehzahl mit der Solldrehzahl
- 81: Berechnen eines Leistungskorrekturwerts und eines Stellungskorrekturwerts
- 800: Drehzahldifferenz
- 801: Leistungskorrekturwert
- 802: Stellungskorrekturwert
- A: Bestimmung über Strömungseigenschaften des Verdichters
- B: Bestimmung über thermodynamische Eigenschaften des Verdichters

## Patentansprüche

1. Verfahren zum Betreiben eines Abgasturboladers (1), der einen Verdichter (10) und eine Abgasturbine (11) aufweist, wobei auf Grundlage eines Verdichter-Druckverhältnis-Sollwerts (600) für ein Druckverhältnis über dem Verdichter (10) und eines Verdichter-Massenstrom-Sollwertes (601) für einen Massenstrom durch den Verdichter (10) ein Druckverhältnis über der Abgasturbine (11) eingestellt (6) wird.

2. Verfahren nach Anspruch 1, wobei auf der Grundlage des Verdichter-Druckverhältnis-Sollwerts (600) und des Verdichter-Massenstrom-Sollwerts (601) eine Solldrehzahl (609) des Verdichters (10) ermittelt (64) wird und auf Grundlage dieser Solldrehzahl (609) das Druckverhältnis über der Abgasturbine eingestellt wird.

3. Verfahren nach Anspruch 2, wobei die Solldrehzahl (609) mittels eines strömungstechnischen Verdichterkennfelds bestimmt wird oder aus dem Verdichter-Druckverhältnis-Sollwert (600) und dem Verdichter-Massenstrom-Sollwerts (601) berechnet wird.

4. Verfahren nach einem der Ansprüche 2 oder 3, wobei auf der Grundlage der Solldrehzahl (609) und des Verdichter-Massenstrom-Sollwerts (601) eine Solltemperaturdifferenz (610) über dem Verdichter ermittelt wird und auf Grundlage dieser Solltemperaturdifferenz (610) das Druckverhältnis über der Abgasturbine eingestellt wird.

5. Verfahren nach einem der vorhergehenden Ansprüche, wobei auf Grundlage des Verdichter-Druckverhältnis-Sollwerts (600) und des Verdichter-Massenstrom-Sollwerts (601) eine Verdichter-Sollleistung (602) des Verdichters (10) ermittelt (60) wird und auf Grundlage dieser Verdichter-Sollleistung (602) das Druckverhältnis über der Abgasturbine eingestellt wird, wobei die Verdichter-Sollleistung (602) insbesondere auf Grundlage der Solldrehzahl (609) des Verdichters (10), der Solltemperaturdifferenz (610) über Verdichter und des Massenstrom-Sollwerts (601) bestimmt wird.

6. Verfahren nach einem der vorhergehenden Ansprüche, wobei das Druckverhältnis über der Abgasturbine (11) auf Grundlage des Verdichter-Druckverhältnis-Sollwerts (600), des Verdichter-Massenstrom-Sollwerts (601) und einer aktuellen Drehzahl (709) eingestellt (81) wird.

7. Verfahren nach Anspruch 6, wobei die aktuelle Drehzahl (709) des Verdichters (10) mit Hilfe eines strömungstechnischen Kennfeldes in Abhängigkeit von einem aktuellen Verdichter-Druckverhältnis (700) über dem Verdichter (10) und einem aktuellen Massenstrom (701) durch den Verdichter (10) bestimmt (70) wird.

8. Verfahren nach einem der Ansprüche 6 oder 7, wobei auf Grundlage des Verdichter-Druckverhältnis-Sollwerts (600), des Massenstrom-Sollwerts (601) und der aktuellen Drehzahl (709) ein Leistungskorrekturwert (801) bestimmt wird, auf Grundlage dessen das Druckverhältnis über der Abgasturbine (11) verändert wird und/oder wobei auf Grundlage der Solldrehzahl (609) und der aktuellen Drehzahl (709) ein Stellungskorrekturwert (802) bestimmt wird, auf Grundlage dessen das Druckverhältnis über der Abgasturbine (11) verändert wird.

9. Verfahren nach einem der vorhergehenden Ansprüche, wobei auf der Grundlage des Verdichter-Druckverhältnis-Sollwerts (600) und des Verdichter-Massenstrom-Sollwerts (601) eine Solleinstellung einer das Druckverhältnis über der Abgasturbine beeinflussenden Einrichtung, insbesondere eine Sollstellung (608, 608a) für verstellbare, nicht rotierende Leitschaufeln der Abgasturbine (11) und/oder eine Sollstellung einer Bypassklappe eines Bypasses bestimmt wird und auf Grundlage der Sollstellung (608, 608a) das Druckverhältnis über der Abgasturbine eingestellt wird.

10. Steuerung zum Betreiben eines Abgasturboladers (1), wobei die Steuereinheit zum Ausführen eines Verfahrens nach einem der vorhergehenden Ansprüche ausgelegt ist.
